# EUROPEAN PATENT APPLICATION

(11) **EP 2 958 013 A1**
(43) Date of publication of application: **23.12.2015**
(21) Application number: 14305946.7
(22) Date of filing: 19.06.2014
(51) Int. Cl.: G06F 9/44, G06F 17/30

(54) **Method for selecting contents from a plurality of contents**

(71) Applicant: Orange, 75015 Paris (FR)
(72) Inventor: Maltese, Marcella, London, n1 1bp (GB); Collignon, Vivien, 35132 VEZIN-LE-COQUET (FR)
(74) Representative: Regimbeau

(57) **Abstract**

Present system relates to a method to display on a space limited screen of at least one electronic device connected to a server a selection of contents from a plurality of contents, the method being executed by the server and comprising the steps of selecting from the plurality of contents a limited number of contents that fits the space limited screen when displayed, sending the limited selection of contents to the at least one electronic device, receiving an indication of user actions on the at least one electronic device related to each content displayed, monitoring each content of the limited selection of contents using the received indications and, when the monitoring indicates that a certain content fulfils a criterion, removing this certain content from the limited selection of content and selecting another content from the remaining plurality of content so as to update the limited selection of content for subsequent sending.

## Description

### FIELD OF THE PRESENT SYSTEM:

The present invention relates to selection of contents and, more specifically, to a selection of contents that fits the space limited screen of an electronic device when displayed.

### BACKGROUND OF THE PRESENT SYSTEM:

Today, users are overwhelmed by contents available via online services such as news websites. Lost in the enormous availability of contents, users may pick the contents they access by chance, and may be quite often disappointed by this somehow randomly accessed content.

Users also feel inclined to postpone their reading of a certain content, either because they are distracted by the enormous availability of contents, and may choose to read other contents first, or because more generally they consider that a content will be available virtually forever.

More prosaically, such overwhelming availability of contents, which is going crescendo day by day, cannot be displayed on the limited space screen of the electronic devices such as smartphones used by users to access such contents.

There is a need for a method to select relevant content for the users from a vast plurality of contents, and manage the display of this selection of contents on electronic devices with space limited screens.

### SUMMARY OF THE PRESENT SYSTEM:

It is an object of the present system to overcome disadvantages and/or make improvements in the prior art.

Present system discloses a method to display on a space limited screen of at least one electronic device connected to a server a selection of contents from a plurality of contents, the method being executed by the server and comprising the steps of selecting from the plurality of contents a limited number of contents that fits the space limited screen when displayed, sending the limited selection of contents to the at least one electronic device, receiving an indication of user actions on the at least one electronic device related to each content displayed, monitoring each content of the limited selection of contents using the received indications and, when the monitoring indicates that a certain content fulfils a criterion, removing this certain content from the limited selection of content and selecting another content from the remaining plurality of content so as to update the limited selection of content for subsequent sending.

The method allows presenting on the space limited screen of an electronic device only a selection of contents from a plurality of contents. This is improving the readability of the selected contents, preventing the users to be distracted or overwhelmed by too many contents, and giving to the user a direct global view on available selected contents, facilitating the user choice. The method discloses a way to manage said selection of contents by removing and replacing some contents of the selection. By monitoring the user action on the displayed contents, the method advantageously selects contents to be removed first from the selection, guarantying that unpopular contents are replaced.

In one embodiment of present system, the received indication corresponds to a user action to access a content on at least one electronic device.

This allows counting the number of access to a given content. The system may monitor the number of access to a given content.

In a further complementary embodiment of present system, the received indication corresponds to a user action on the accessed content.

The system may not only monitor access to a given content, but also monitor any action performed once the content has been accessed. Thus, for example, when a user reads a given content on his smartphone, like an article, user action such as the sharing of the article may be monitored.

In an alternative embodiment of present system, the selection of a content comprises associating a counter to the selected content and setting the value of the counter to a first value, the counter being further updated according to the monitoring of said selected content and the criterion being defined by the counter reaching a second predefined value.

The monitoring may comprise updating a counter associated to a content, said counter being by default set to a first value, increasing or decreasing said counter according to the different indications of user actions received. In this case, the fulfilling of a criterion is the counter associated to a content reaching a second predefined value.

In a complementary embodiment of present system, the first value is defined according to the selected content.

It is then possible to individualize the value of the counter for each content, possibly billing this as a service to content provider.

In an alternative embodiment of present system, the method further comprises sending an indication of the value of the counter associated to the selected content to the at least one electronic device when updating the counter.

Users have an indication of the value of the counter associated to a content displayed. Users may then make their choice taking into account said displayed value. This permits to prevent the user from postponing their reading of a given content too long as they know that if they do not access quickly a content with a decreasing counter displayed, this content shall quickly disappear and will not be accessible anymore. This is creating a scarcity effect.

Another object of the invention is a server connected to at least one electronic device, the server comprising means for selecting from a plurality of contents a limited number of contents, sending the limited selection of contents to the at least one electronic device, receiving an indication of user actions on the at least one electronic device related to each content displayed, monitoring each content of the limited selection of contents using the received indications, removing a certain content from the limited selection of content, selecting another content from the remaining plurality of content so as to update the limited selection of content for subsequent sending.

Another object of the invention concerns a computer program or application software, in particular computer programs on or in a non-transitory computer readable medium, suitable for selecting from a plurality of contents a limited number of contents that fits a space limited screen when displayed and updating said selection. These programs can use any programming language, and be in the form of source code, binary code, or of code intermediate between source code and object code such as in a partially compiled form, or in any other desirable form for implementing the methods according to the invention.

The information medium may be any entity or device capable of storing the software. For example, the medium can comprise a storage means, such as a ROM, for example a CD/DVD ROM or a microelectronic circuit ROM, or else a magnetic recording means, for example a diskette (floppy disk) or a hard disk.

### BRIEF DESCRIPTION OF THE DRAWINGS:

The invention is explained in further detail, and by way of example, with reference to the accompanying drawings wherein:
FIG. 1 shows an exemplary system comprising a server and electronic devices according to one embodiment of present system;
FIGs. 2, 3 and 4 show illustrative examples of the display of a limited selection of contents on an electronic device screen;
FIG. 5 shows a flowchart of an exemplary embodiment of present system.

### DETAILED DESCRIPTION OF THE PRESENT SYSTEM:

The following are descriptions of illustrative embodiments that when taken in conjunction with the following drawings will demonstrate the above noted features and advantages, as well as further ones. In the following description, for purposes of explanation rather than limitation, illustrative details are set forth such as architecture, interfaces, techniques, element attributes, etc. However, it will be apparent to those of ordinary skill in the art that other embodiments that depart from these details would still be understood to be within the scope of the appended claims. Moreover, for the purpose of clarity, detailed descriptions of well known devices, circuits, tools, techniques and methods are omitted so as not to obscure the description of the present system. It should be expressly understood that the drawings are included for illustrative purposes and do not represent the scope of the present system. In the accompanying drawings, similar reference numbers in different drawings may designate similar elements.

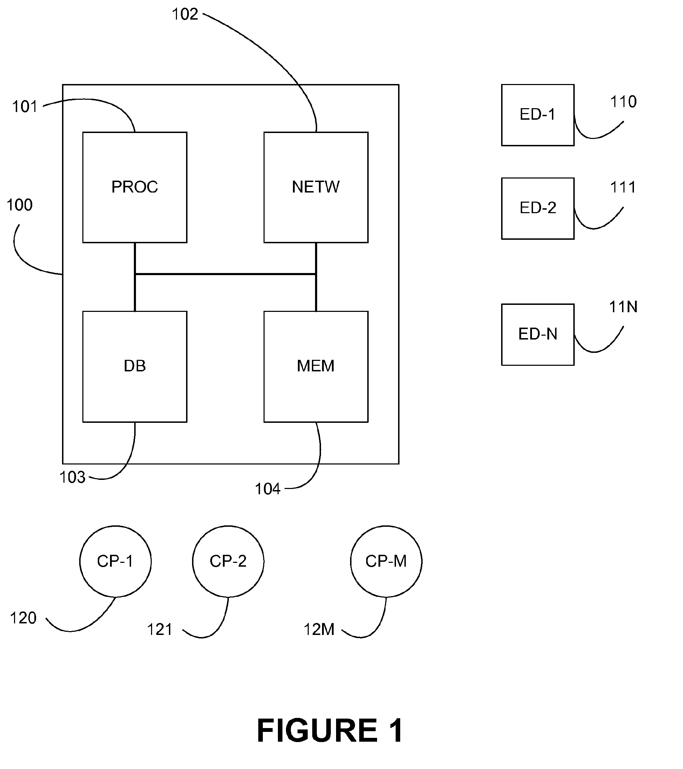

FIG. 1 is an exemplary system comprising a server 100 and electronic devices 110, 111 to 11 N according to one embodiment of present system.

In this embodiment, the server 100 is typically a web server, comprising for example a processor 101, a network module 102, a database module 103 and a memory module 104. The database module 103 may store some contents or may be connected through the network module 102 to several content providers 120, 121 to 12M to retrieve some other contents. A plurality of contents is then available to the server 100, either directly via the database module 130, or via the different content providers 120, 121 to 12M.

Content is typically an article, possibly comprising some text and media such as photos or videos. That would be the case for example if the server 100 is a web server hosting a press website. Alternatively, content can be any media content such as video, music, photos, text or a combination of such media contents.

Several electronic devices 110, 111 to 11 N are connected to the server 100, via the network module 102, to access the content hosted by the server 100 (directly, or provided by content providers 120, 121 to 12M). Such electronic devices 110, 111 to 11N are, in this exemplary embodiment, smartphones comprising space limited screens. By space limited screens, it should be understood that, comparing to a more classical computer, with a dedicated screen, or even compared to a laptop, smartphones have much smaller screens. Typically, a smartphone screen size is about 3 to 5 inches.

In complementary embodiment of present system, electronic devices 110, 111 to 11N may also be computer, a laptop, a tablet, or any electronic device comprising a network connection, a screen and input means such as for example an Internet connected TV.

Owners of the smartphones 110, 111 to 11N may browse the web server 100 from their smartphones. By browsing, it should be understood that the server 100 is sending some contents to a smartphone 110 depending on the user action on said smartphone 110.

The processor 101 of the server 100 may execute a computer program implementing the method of present system. Thus, the server 100 has means for selecting from a plurality of contents, directly or indirectly available through the database module 103, a limited number of contents. The server 100 has means for sending the limited selection of contents to anyone of the electronic devices 110, 111 or 11N for subsequent rendering of the limited selection of contents on the screens of the electronic devices. The server 100 may also receive, from a given smartphone, indication of a user action on a said smartphone. The server may send contents or receive indications through the network module 102. Such network module 102 comprises typically an IP stack and an Ethernet interface, and allows the server to be connected to the different smartphones 110, 111 to 11N via an Internet connection. The server 100, through the execution of the computer program, is arranged to monitor each content of the limited selection of content using the received indications. Monitoring a given content, depending on the embodiment of present system, may comprise updating a counter associated to the given content. When selecting a content, the associated counter is set to a first value. The first value can be a default value, used for all the selected contents, or can be defined according to each selected content. Rules may be defined to set the first value, based on the content type, content provider, time of the day, special event or any criteria available directly or not to the server 100. The value of a counter associated to a content is updated by the server 100 depending on the different indications of user gesture received from the various smartphones 110, 111 to 11N connected to the server 100.

The server 100 has also means for removing from the selection a certain content when a criterion is fulfilled. The criterion may be defined as a certain value for a counter associated to a content.

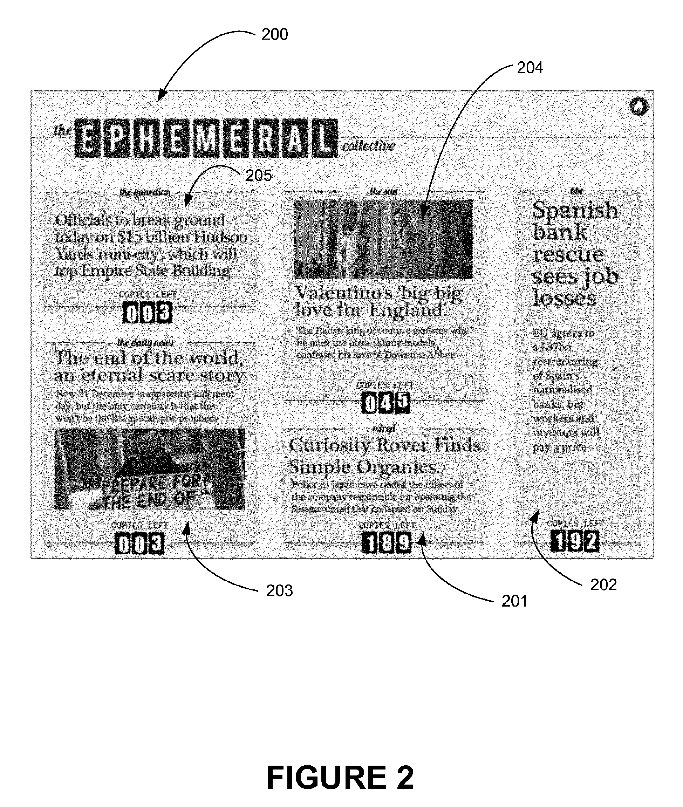

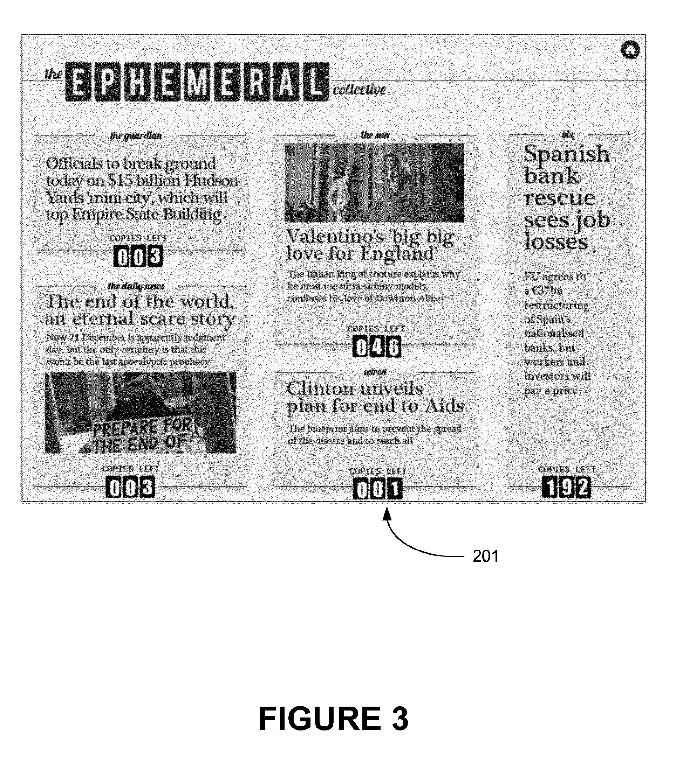

FIGs. 2, 3 and 4 show illustrative examples of the display of a limited selection of contents on an electronic device 110, 111 or 11 N screen.

Once connected to the service provided by the server 100, the limited space screen 200 of a smartphone 110 (or any other smartphone 111 to 11N) may look like as represented in FIG. 2. In present example, the service provided by the server 100 is here called *"Ephemeral"* and presents to the user of the smartphone 110 a limited selection of contents or articles coming from different content providers (here, as an illustration, five articles 201, 202, 203, 204 to 205) on an exemplary graphical user interface. The limited selection of contents is rendered here through the use of snippets or thumbnails. By snippets or thumbnails, it should be understood portion or metadata linked to the content, so as to give the user an idea about the content. It could be for example the title of an article, the first lines of the article and/or an image or a photo illustrating the article as seen in FIGs 2, 3 and 4.

The graphical user interface displayed on the screen of the electronic device may be formed locally using the limited selection of contents sent by the server 100. Alternatively, the graphical user interface may be formed by the server 100 and pushed to the electronic devices 110, 111 to 11N.

The limited number of contents to be selected from the plurality of contents may be determined using an average screen size of the electronic devices 110, 111 to 11 N. In this case, the limited number is chosen so as to offer an adequate readability for a user of the limited selection of contents when displayed on an average size screen. A given electronic device receiving the limited selection of contents from the server 100 may not display the full limited selection of contents depending on its own screen size, especially if the screen size of the given electronic device is much smaller than the average screen size. Indeed, as explained hereafter, if a counter is associated to a content, the given electronic device may only display the contents with the lowest counters associated,

The user of the smartphone 110 can select to access one of the displayed contents 201, 202, 203, 204 or 205 via any user action such as a click, a tap, a pinch or any user action depending of the input technology available on the smartphone 110 (touch screen, trackball, trackpad, joystick, keyboard, etc.).

As illustrated in FIGs. 2, 3 and 4, a counter is associated to each content 201 to 205. The counter is called in this embodiment "copies left".

In one embodiment of present system, the counter associated to a content is decreased every time the said content is accessed by a user. By accessed, it should be understood by example that the user clicked on the content to read it, triggering the display of the content (here, in FIGs 2, 3 and 4, the display of a given content when accessed by a user is not represented).

Thus, if the counter is decreased by one for one access, from FIG. 2 to FIG. 3, the content 301 have been accessed (or viewed) at least 188 times (from 189 to 1). At least 188 and not exactly 188, because, as it will be described hereafter, the value of the counter may be also increased during the monitoring by the server 100 of a content.

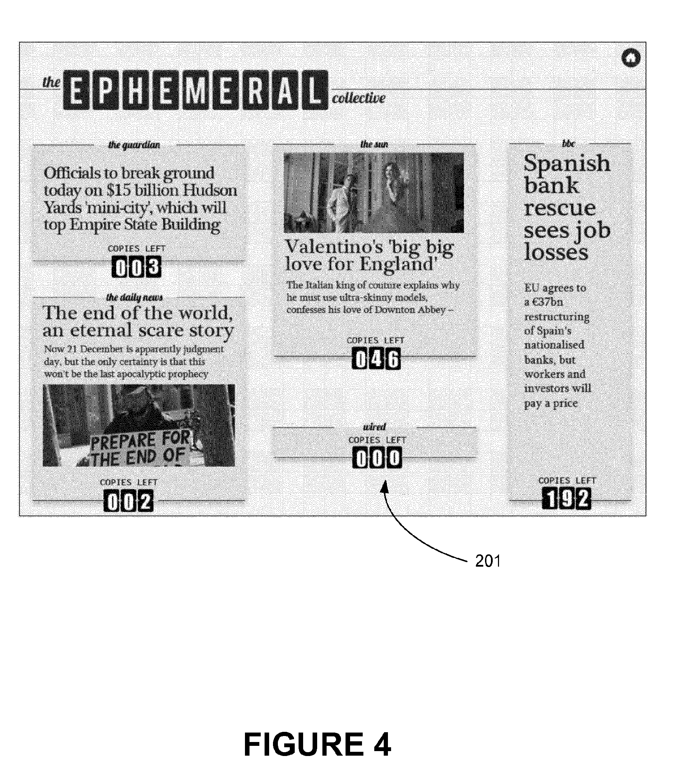

The server 100 is continuously monitoring the different selected contents and sends update of the value of the different counters associated to each selected content to connected smartphones 110, 111 to 11N. When the counter reaches zero, as illustrated in FIG. 4 for the content 201, the associated content is no more available for the user. Indeed, as illustrated in 201 of FIG. 4, the 201 content is no more displayed. In a next step not represented here, the server 100 shall replace this content by another content selected from the plurality of contents and send the update to all the connected smartphones 110, 111 to 11N. It shall be understood that when a content is removed from the limited selection of content by the server 100, said content is no more available from any smartphone 110, 111 to 11 N.

When a user is accessing a displayed content, in other words, reading or viewing the content, the user may be presented several options such as recommending the content, sharing the content with friends, saving the content, printing the content, or any other action that can be associated to a content. If such action is performed by a user on a smartphone 110, 111 or 11 N, the smartphone shall send the indication of the user action to the server 100. Such received indications feed the monitoring of the content performed by the server 100

In one particular embodiment of present system, indication of the sharing of a content may increase the value of the associated counter. The counter may be for example increased by two.

Consequently, content accessed by users, but not shared as often, are quickly removed from the limited selection of content displayed. On the contrary, content accessed and shared may potentially stay on the limited selection of content forever, at least as long as they are shared after being accessed. This mechanism makes possible a quick removing from the limited list of uninteresting contents and a quick rotation of content offered by the service, guarantying a renew interest for the users. It also prevents the users from postponing their reading of a content, as said content may be removed quickly and will not be available anymore.

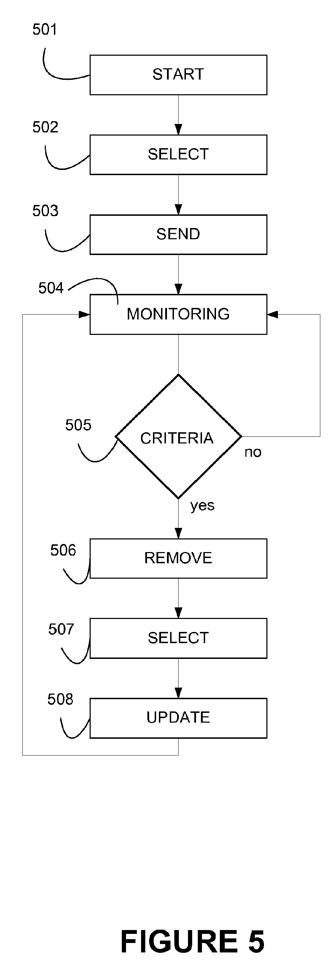

FIG. 5 shows a flowchart of an exemplary embodiment of present system. In this embodiment, the flowchart represents different steps of a method implemented in a computer program and executed by the processor 101 of the server 100. The processor 101 is connected at least to the network modules 102, the database module 103 and memory module 104.

Several electronic devices 110, 111 or 11N may be connected, via an Internet connection for example, to the server 100. The electronic devices 110, 111 or 11 N can be smartphones, such smartphones being characterized among other things by having smaller screens than for example computers.

The first step 501 corresponds to the initiation of the system, for example after the boot of the server 100 or when the computer program implementing the method of present system is launched. The method may be implemented for example as a plug-in module for a web server computer program.

In the step 502, the server selects from plurality of contents a limited number of contents. The plurality of contents is available through the database module 103, possibly stored in the database module 103 or provided by the different content providers 120, 121 to 12M.

The number of contents selected is limited, the limit shall be chosen in order for the selected contents to fit the space limited screen of an electronic device 110, 111 or 11N when displayed on its screen.

As the electronic devices 110, 111 or 11N may have different size of screen, an average size of screens may be calculated and used to determine the number of contents to be selected. Such number should be adapted for a further rendering of the selected contents on an average size screen. In the exemplary embodiments illustrated in FIGs. 2, 3 and 4, such number has been chosen as five. Indeed, five contents snippets or thumbnails are displayed. If one of the electronic devices 110, 111 or 11N screen is too small to display correctly the number of limited contents, this electronic device may only display a sub-selection of the limited selection of contents.

Alternatively, the number of contents to be selected may be determined according to the size of the smallest screen of the electronic devices.

A content may comprise text, audio, video, any other media, and possibly an abstract or a thumbnail that shall be used to display said content on the screen of an electronic device 110, 111 or 11N.

In the next step 503, the server 100 sends the limited selection of contents to at least one of the electronic devices 110, 111 or 11N for subsequent rendering on the electronic devices 110, 111 or 11N screens. By sending to an electronic device 110, 111 or 11 N, it could be understood that the server 100 is sending the limited selection of contents following a request of the electronic device, as normally implemented in a web service. In a complementary embodiment, the server 100 may push - that is to say send without previous request from the electronic device 110, 111 or 11N - the content to any electronic device 110, 111 or 11 N connected to the server 100.

During the next step 504, the server 100 receives from the connected electronic devices 110, 111 to 11N indications of user actions on these electronic devices, the user action being related to each content displayed on the electronic devices screens. In this step 504, the server 100 monitors each content of the limited selection of contents using the received indications.

A user may access, in other words view, a content by performing a user action, such as a user gesture on a touch screen of the smartphone 110, 111 or 11 N. The user gesture may be performed for example on the abstract or thumbnail of the content displayed on the screen of an electronic device 110, 111 or 11 N.

A received indication may correspond to a user action to access a content on one electronic device 110, 111 or 11 N. This corresponds to a user on an electronic device 110, 111 or 11 N accessing a content, that is to say for example reading an article or viewing a video.

Another received indication may correspond to a user action on the accessed content. This corresponds to a user on an electronic device 110, 111 or 11N performing certain actions when accessing a content. Depending of the embodiment of present system, this could be a user performing an action to share an accessed - that is to say viewed or read - article.

When the monitoring indicates that a certain content fulfils a criterion, in a step 505, the server 100 shall remove this certain content from the limited selection of content (step 506) and select another content from the remaining plurality of content so as to update the limited selection of content for subsequent sending (step 507).

In one embodiment of present system, the monitoring may comprise the monitoring of a counter associated to each content. The counter associated to a content shall be initiated during the selection step 502. In step 502, when the server 100 selects from the plurality of contents a limited number of contents, the server associates a counter to the selected content and sets the value of the counter to a first value. The first value may be defined according to the selected content. For example, the first value may be dependent of the content provider 120, 121 or 12M providing said content.

The counter is further updated by the server 100 according to the monitoring of said selected content and the criterion is defined by the counter reaching a second predefined value.

In one exemplary embodiment, the counter associated to a content may be decreased when the server 100 receives from an electronic device 110, 111 or 11 N an indication corresponding to a user action to access a content on the electronic device 110, 111 or 11N. In addition, the counter associated to a content may be increased when the server 100 the received from the electronic device an indication corresponding to a user action on the accessed content.

In this exemplary embodiment, the criterion is defined by the counter reaching a second predefined value. As illustrated in FIG. 4, said second predefined value may be zero.

Thus, when the monitoring indicates that a counter associated to a certain content of the limited selection reaches the second predefined value, for example zero, the server removes the certain content from the limited selection in a step 506 and selects another content in replacement among the plurality of contents in a step 507. Such selection of a content performed in step 507 is similar to the selection performed in step 502.

Then, the server 100 can update in a step 508 the limited selection of content and send the updated limited selection to the electronic devices 110, 111 or 11 N, either by pushing the updated limited selection of contents to the electronic devices 110, 111 or 11 N connected to the server 100 or by sending the updated limited selection of contents in response to a request from an electronic device 110, 111 or 11 N.

This last option may be implemented using web technology like HTML with a refresh tag in the header of the webpage sent by the server 100 to the electronic devices 110, 111 or 11N. Alternatively, the present system may be implemented via an application installed on each of the electronic devices 110, 111 or 11 N, such application being connected to an application executed by the server 100 on a client-server model.

When sending the updated limited selection of contents, the server 100 may send the full updated limited selection of contents to the electronic devices 110, 111 or 11 N or only the difference between the updated limited selection and the previous limited selection of contents. In other words, the server 100 may send the full limited selection of contents or only the difference between the non-updated selection and the updated selection.The server 100 keeps monitoring each content of the limited selection as long as necessary, that is to say as long as the process of the computer program implementing the method is executed. The limited selection of contents, as well as their associated counters, may be stored and backed-up, allowing the process to be stopped and restarted. In this case, the selection step 502 is modified in order to take into account backed-up data.

Finally, the above discussion is intended to be merely illustrative of the present system and should not be construed as limiting the appended claims to any particular embodiment or group of embodiments. Thus, while the present system has been described with reference to exemplary embodiments, such as embodiment described in the different figures, it should also be appreciated that numerous modifications and alternative embodiments may be devised by those having ordinary skill in the art without departing from the broader and intended spirit and scope of the present system as set forth in the claims that follow. Further, while exemplary illustrations were provided to facilitate an understanding of the present system, other system for implementing the method described here before may be provided in accordance with further embodiments of the present system.

The section headings included herein are intended to facilitate a review but are not intended to limit the scope of the present system. Accordingly, the specification and drawings are to be regarded in an illustrative manner and are not intended to limit the scope of the appended claims.

In interpreting the appended claims, it should be understood that:
a) the word "comprising" does not exclude the presence of other elements or acts than those listed in a given claim;
b) the word "a" or "an" preceding an element does not exclude the presence of a plurality of such elements;
c) any reference signs in the claims do not limit their scope;
d) several "means" may be represented by the same item or hardware or software implemented structure or function;
e) any of the disclosed elements may be comprised of hardware portions (e.g., including discrete and integrated electronic circuitry), software portions (e.g., computer programming), and any combination thereof;
f) hardware portions may be comprised of one or both of analog and digital portions;
g) any of the disclosed devices or portions thereof may be combined together or separated into further portions unless specifically stated otherwise;
h) no specific sequence of acts or steps is intended to be required unless specifically indicated;
i) the term "plurality of" an element includes two or more of the claimed element, and does not imply any particular range of number of elements; that is, a plurality of elements may be as few as two elements, and may include an immeasurable number of elements, and;
j) the term "greater than" (respectively "lower than") should be understood as "strictly greater than" (resp. "strictly lower than") or "greater than or equal to" (resp. "lower than or equal to"), both implementation being possible unless specifically indicated.

## Claims

1. A method to display on a space limited screen of at least one electronic device connected to a server a selection of contents from a plurality of contents, the method being executed by the server and comprising the steps of:
- selecting from the plurality of contents a limited number of contents that fits the space limited screen when displayed,
- sending the limited selection of contents to the at least one electronic device,
- receiving an indication of user actions on the at least one electronic device related to each content displayed,
- monitoring each content of the limited selection of contents using the received indications,
and, when the monitoring indicates that a first content fulfils a criterion:
- removing this first content from the limited selection of content,
- selecting a second content from the remaining plurality of content so as to update the limited selection of content using the second content for subsequent sending.

2. The method according to previous claim, the received indication corresponding to a user action to access a content on at least one electronic device

3. The method according to previous claim, the received indication corresponding to a user action on the accessed content.

4. The method according to any previous claims, the selection of a content comprising:
- associating a counter to the selected content,
- setting the value of the counter to a first value,
the counter being further updated according to the monitoring of said selected content, and,
the criterion being defined by the counter reaching a second predefined value.

5. The method according to previous claim, the first value being defined according to the selected content.

6. The method according to claims 4 or 5, the method further comprising sending an indication of the value of the counter associated to the selected content to the at least one electronic device when updating the counter.

7. A server connected to at least one electronic device, the server comprising means for:
- selecting from a plurality of contents a limited number of contents,
- sending the limited selection of contents to the at least one electronic device,
- receiving an indication of user actions on the at least one electronic device related to each content displayed,
- monitoring each content of the limited selection of contents using the received indications,
- removing a certain content from the limited selection of content,
- selecting another content from the remaining plurality of content so as to update the limited selection of content for subsequent sending.

8. An application program embodied on a non-transitory computer readable medium and arranged to execute the method of claims 1 to 6.
